# EUROPEAN PATENT APPLICATION

(11) **EP 4 024 542 A1**
(43) Date of publication of application: **06.07.2022**
(21) Application number: 20856350.2
(22) Date of filing: 28.08.2020
(51) Int. Cl.: H01M 10/04, H01M 10/30, H01M 10/44, H01M 10/48

(54) **SECONDARY BATTERY, SECONDARY BATTERY SYSTEM, AND CONTROL METHOD**

(30) Priority: 30.08.2019 JP 2019159137
(71) Applicant: Kyocera Corporation, Kyoto-shi Kyoto 612-8501 (JP)
(72) Inventor: OHKUMA, Takeshi, Kyoto-shi, Kyoto 612-8501 (JP); WAKASHIMA, Ryo, Kyoto-shi, Kyoto 612-8501 (JP)
(74) Representative: TBK
(86) International application number: PCT/JP2020/032704
(87) International publication number: WO 2021/040002

(57) **Abstract**

A secondary battery according to an embodiment includes an electrolyte, a cathode, and an anode. The electrolyte includes zinc, indium, bismuth, and a halogen species. The cathode and the anode are disposed in the electrolyte.

## Description

### Technical Field

The disclosed embodiments relate to a secondary battery, a secondary battery system, and a control method.

### Background Art

Known secondary batteries circulate an electrolyte containing tetrahydroxy zincate ions ([Zn(OH)₄]²⁻) between a cathode and an anode (for example, see Non-Patent Document 1).

Furthermore, a technique has been proposed that suppresses the growth of dendrites by covering an anode including an active material such as a zinc species with an ion conductive layer having selective ionic conductivity (for example, see Patent Document 1).

### Citation List

### Patent Literature

Patent Document 1: JP 2015-185259 A

### Non-Patent Literature

Non-Patent Document 1: Y. Ito. et al.: Zinc morphology in zinc-nickel flow assisted batteries and impact on performance, Journal of Power Sources, Vol. 196, pp. 2340-2345, 2011

### Summary of Invention

A secondary battery according to one aspect of an embodiment includes an electrolyte, a cathode, and an anode. The electrolyte includes zinc, indium, bismuth, and a halogen species. The cathode and the anode are disposed in the electrolyte.

### Brief Description of Drawings

FIG. 1 is a diagram illustrating an overview of a secondary battery system according to a first embodiment.
FIG. 2 is a block diagram illustrating a functional configuration of a secondary battery system according to the first embodiment.
FIG. 3 is a diagram illustrating an example of a connection between electrodes of a secondary battery included in the secondary battery system according to the first embodiment.
FIG. 4 is a diagram illustrating an overview of a secondary battery system according to a second embodiment.
FIG. 5 is a table listing evaluation results of states of deposition of zinc adhering to the surface of an anode due to charging.

### Description of Embodiments

Embodiments of a secondary battery, a secondary battery system, and a control method disclosed in the present application will be described in detail below with reference to the accompanying drawings. Note that the present invention is not limited to the embodiments that will be described below.

### First Embodiment

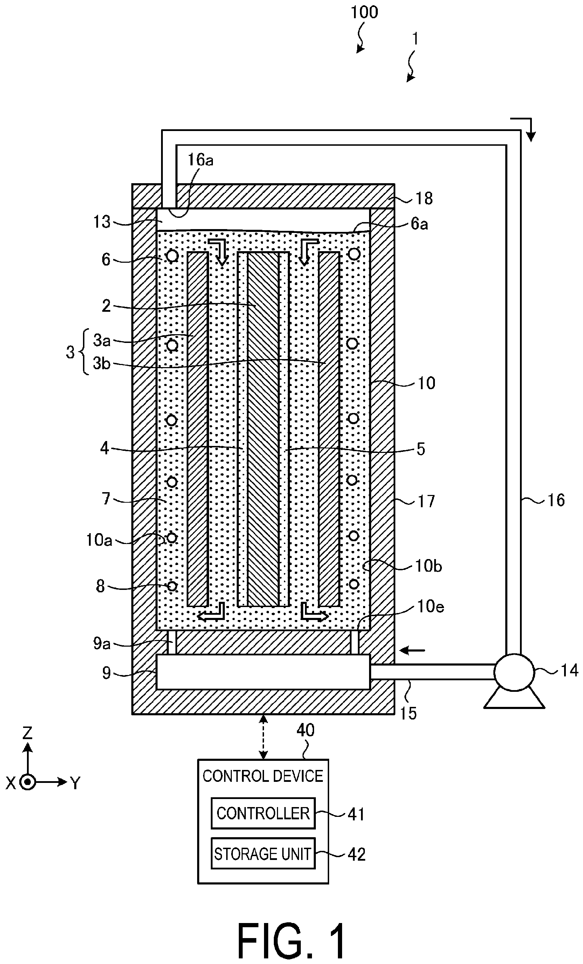

FIG. 1 is a diagram illustrating an overview of a secondary battery system according to a first embodiment. A secondary battery system 100 illustrated in FIG. 1 includes a secondary battery 1 and a control device 40. The secondary battery 1 includes a reaction unit 10 and a generation unit 9 housed in a casing 17, and a supply unit 14. The reaction unit 10 includes a cathode 2, anodes 3, diaphragms 4, 5, an electrolyte 6, and a powder 7. The secondary battery 1 is a device that is configured to cause the electrolyte 6 housed in the reaction unit 10 to flow by causing gas bubbles 8 generated by the generation unit 9 to float in the electrolyte 6. The generation unit 9 is an example of a flow device.

For the sake of clarity, FIG. 1 illustrates a three-dimensional orthogonal coordinate system including a Z-axis for which the vertically upward direction is a positive direction and the vertically downward direction is a negative direction. Such orthogonal coordinate systems may also be presented in other drawings used in the description below. Components that are the same as those of the secondary battery system 100 illustrated in FIG. 1 are assigned the same reference signs, and descriptions thereof are omitted or simplified.

The cathode 2 is, for example, a conductive member containing a nickel compound, a manganese compound, or a cobalt compound as a cathode active material. As the nickel compound, for example, nickel oxyhydroxide, nickel hydroxide, cobalt-compound-containing nickel hydroxide, or the like can be used. As the manganese compound, for example, manganese dioxide or the like can be used. As the cobalt compound, for example, cobalt hydroxide, cobalt oxyhydroxide, or the like can be used. Furthermore, the cathode 2 may include graphite, carbon black, conductive resin, and the like. The cathode 2 may be nickel metal, cobalt metal, manganese metal, or an alloy thereof.

Furthermore, the cathode 2 includes, for example, the cathode active material described above, a conductive body, or other additives as a plurality of granules. Specifically, the cathode 2 is obtained by, for example, pressing a cathode material in the form of paste containing a granular active material and a conductive body formulated at a predetermined ratio as well as a binder contributing to shape retainability into a foam metal having conductivity, such as foam nickel, so as to be formed into a desired shape and dried.

The anodes 3 include an anode active material as a metal. For example, a metal plate of a material such as stainless steel or copper, or a stainless steel or copper plate having a surface plated with nickel, tin, or zinc can be used as each of the anodes 3. Furthermore, a stainless steel or copper plate having a surface plated and then partially oxidized may also be used as each of the anodes 3.

The anodes 3 include an anode 3a and an anode 3b disposed so as to face each other with the cathode 2 interposed therebetween. The cathode 2 and the anodes 3 are disposed so that the anode 3a, the cathode 2, and the anode 3b are arranged in order along the Y-axis direction at predetermined intervals. By providing respective intervals between the adjacent cathode 2 and anodes 3 in this manner, a distribution path for the electrolyte 6 and the gas bubbles 8 between the cathode 2 and the anodes 3 is ensured.

The diaphragms 4, 5 are disposed so as to sandwich the cathode 2 from both sides in the thickness direction, that is, in the Y-axis direction. The diaphragms 4, 5 are composed of a material that allows the movement of ions included in the electrolyte 6. Specifically, an example of the material of the diaphragms 4, 5 is an anionic conductive material such that the diaphragms 4, 5 have hydroxide ion conductivity. Examples of the anionic conductive material include gel-like anionic conductive materials having a three-dimensional structure such as an organic hydrogel, solid polymeric anionic conductive materials, and the like. The solid polymeric anionic conductive material includes, for example, a polymer and at least one compound selected from the group consisting of oxides, hydroxides, layered double hydroxides, sulfate compounds and phosphate compounds, the compound containing at least one element selected from Groups 1 to 17 of the periodic table.

The diaphragms 4, 5 are preferably composed of a dense material and have a predetermined thickness so as to suppress transmission of metal ion complexes such as [Zn(OH)₄]²⁻ with an ion radius larger than that of hydroxide ions. Examples of the dense material may include materials having a relative density of 90% or more, more preferably 92% or more, and even more preferably 95% or more as calculated by the Archimedes method. The predetermined thickness is, for example, from 10 µm to 1000 µm, and more preferably from 50 µm to 500 µm.

In this case, during charging, the likelihood of zinc precipitated at the anodes 3a, 3b growing as dendrites (needle-shaped crystals) and penetrating through the diaphragms 4, 5 can be reduced. As a result, conduction between the mutually facing anodes 3 and cathode 2 can be reduced.

The electrolyte 6 is an alkaline aqueous solution containing an alkali metal in an amount of 6 mol·dm⁻³ or more. The alkali metal is potassium, for example. Specifically, for example, an aqueous solution from 6 to 6.7 mol·dm⁻³ of potassium hydroxide can be used as the electrolyte 6. In addition, an alkali metal such as lithium or sodium may be added as a hydroxide (lithium hydroxide, sodium hydroxide) for the purpose of suppressing oxygen generation.

Furthermore, the electrolyte 6 contains a zinc component. The zinc component dissolves in the electrolyte 6 as [Zn(OH)₄]²⁻. As the zinc component, for example, zinc oxide or zinc hydroxide can be used. In addition, the electrolyte 6 can be prepared by adding ZnO in a proportion of 0.5 mol to 1 dm³ of an aqueous solution of potassium hydroxide and adding the powder 7 described later as necessary. The electrolyte 6 before being used or after the end of discharging can contain, for example, 1 × 10⁻⁴ mol·dm⁻³ or more and 5 × 10⁻² mol·dm⁻³ or less, and preferably 1 × 10⁻³ mol·dm⁻³ or more and 2.5 × 10⁻² mol·dm⁻³ or less of a zinc component.

Furthermore, the electrolyte 6 includes an indium component. The indium component dissolves as [In(OH)₄]⁻ in the electrolyte 6, which is an alkaline aqueous solution. As the indium component, indium halides such as indium chloride (InCh), indium bromide (InBr₃), or indium fluoride (InF₃) may be used. Furthermore, the indium component is not limited to those described above as long as it can dissolve in the electrolyte 6, and for example, indium oxide or indium hydroxide dissolved in advance in hydrochloric acid or other components may be used. The electrolyte 6 before being used or after the end of discharging can contain, for example, 1 × 10⁻⁴ mol·dm⁻³ or more and 5 × 10⁻² mol dm⁻³ or less, and preferably 1 × 10⁻³ mol·dm⁻³ or more and 2.5 × 10⁻² mol·dm⁻³ or less of an indium component. When the electrolyte 6 includes the indium component in this manner, zinc precipitated on the anode 3 due to charging is less likely to grow as dendrites, and the conduction between the anodes 3 and the cathode 2 can be reduced.

The electrolyte 6 also includes a bismuth component. The bismuth component dissolves as [Bi(OH)₄]⁻ in the electrolyte 6, which is an alkaline aqueous solution. As the bismuth component, for example, bismuth halides such as bismuth chloride (BiCl₃), bismuth bromide (BiBr₃), bismuth iodide (BiI₃), or bismuth fluoride (BiF₃) can be used. Furthermore, the bismuth component is not limited to those described above as long as it can dissolve in the electrolyte 6, and bismuth oxide or bismuth hydroxide may be used, for example. The electrolyte 6 before being used or after the end of discharging can contain, for example, 0.1 × 10⁻³ mol·dm⁻³ or more and 1 × 10⁻³ mol·dm⁻³ or less of a bismuth component. When the electrolyte 6 includes the bismuth component in this manner, zinc precipitated on the anodes 3 due to charging is further less likely to grow as dendrites, and the conduction between the anodes 3 and the cathode 2 can be reduced.

The electrolyte 6 also includes a halogen species. The halogen species can dissolve in the electrolyte 6 as halide ions (X⁻) and contribute to the stabilization of the indium component and the bismuth component dissolved in the electrolyte 6. The halogen species is, for example, a bromine component, a chlorine component, or a fluorine component. As the bromine component, for example, potassium bromide or hydrogen bromide can be used. As the chlorine component, for example, potassium chloride or hydrochloric acid can be used. As the fluorine component, for example, potassium fluoride or hydrofluoric acid can be used. Furthermore, the indium halide, which is an example of the indium component, also functions as a halogen species stabilizing [In(OH)₄]⁻ in the electrolyte 6. Furthermore, the bismuth halide, which is an example of the bismuth component, also functions as a halogen species stabilizing [Bi(OH)₄]⁻in the electrolyte 6.

For the components in the electrolyte 6, the molar concentration of the potassium component may be larger than the molar concentration of the zinc component. The molar concentration of the zinc component may be larger than the molar concentration of the indium component. The molar concentration of the zinc component may be larger than the molar concentration of the bismuth component. The molar concentration of the indium component may be larger than the molar concentration of the bismuth component. The molar concentration of the halogen species may be larger than the molar concentration of the indium component.

Note that a bromine component may be included as the halogen species. As a result, when the ion radius is large, the reaction between the bromine component and [In(OH)₄]⁻ and [Bi(OH)₄]⁻ in the electrolyte 6 may produce an indium component and a bismuth component in which the hydroxide ions (OH⁻) contained in [In(OH)₄]⁻ and [Bi(OH)₄]⁻ are replaced with bromide ions (Br⁻). At this time, the bromide ions are easily desorbed from indium and bismuth, making it easy to form the indium component and the bismuth component with which zinc is less likely to grow as dendrites. As a result, zinc precipitated on the anodes 3 can be made less likely to grow as dendrites.

A chlorine component may be included as the halogen species. As a result, the chlorine component having an oxidization effect dissolves in the electrolyte 6, thereby enabling the chlorine component to easily receive electrons from metals. This can make it difficult for the indium component and the bismuth component dissolved in the electrolyte 6 to precipitate.

A bromine component and a chlorine component may be included as the halogen species. As a result, with halogen species having different redox potentials dissolved in the electrolyte 6, even if one halogen species is oxidized, the other halogen species can remain dissolved in the electrolyte 6. This can make it difficult for the indium component and the bismuth component to precipitate.

The halogen species dissolves in the electrolyte 6 before being used or after the end of discharging so that the molar mass Mx of the halogen species is, for example, from 3 times to 10 times as large as the molar mass M_{In} of the indium component described above, that is, M_{X}/M_{In} is 3 or more and 10 or less. By regulating the compounded amount of the halogen species in this manner, the halogen species and the indium component can be stably dissolved in the electrolyte 6. In contrast, if M_{X}/M_{In} is less than 3, the indium component is likely to precipitate in the electrolyte 6. If M_{X}/M_{In} exceeds 10, the halogen species is likely to precipitate in the electrolyte 6. Note that when the electrolyte 6 contains only an indium halide (indium bromide (InBr₃), indium chloride (InCl₃), or indium fluoride (InF₃)) as the indium component, M_{X}/M_{In} is "3".

The powder 7 includes zinc, indium, or bismuth. The powder 7 added to the electrolyte 6 may be any of a powder 7 only including zinc; a powder 7 only including indium; a powder 7 only including bismuth; two or more types of powder 7 including zinc, indium, or bismuth; and a powder 7 including two or more types of zinc, indium, and bismuth. These types of powder 7 may also be combined.

The powder 7 including zinc is, for example, zinc oxide, zinc hydroxide, or the like processed or produced in a powder form. The powder 7 is easily dissolved in an alkaline aqueous solution; however, the powder 7 is not dissolved in the electrolyte 6 saturated with the zinc species, but is dispersed or suspended. If convection or the like is generated in the electrolyte 6, the powder 7 becomes dispersed or suspended in the electrolyte 6. That is, the powder 7 is present in the electrolyte 6 in a mobile form. Here, "in a mobile form" does not mean that the powder 7 can move only in a localized space between other powders 7 present in the surrounding area, but instead, means that the powder 7 moves to another position in the electrolyte 6, and thereby the powder 7 is exposed to the electrolyte 6 at a position other than the initial position. Furthermore, the expression "in a mobile form" also means that the powder 7 can move to the vicinity of both the cathode 2 and the anodes 3, or that the powder 7 can move almost anywhere in the electrolyte 6 present in the casing 17. As [Zn(OH)₄]²⁻ dissolved in the electrolyte 6 is consumed, the powder 7 mixed in the electrolyte 6 is dissolved so that the [Zn(OH)₄]²⁻dissolved in the electrolyte 6 approaches saturated concentration and thus the powder 7 and the electrolyte 6 maintain equilibrium with each other. Note that as the powder 7 including zinc, in addition to zinc oxide and zinc hydroxide, metal zinc, calcium zincate, zinc carbonate, zinc sulfate, zinc chloride, or the like may be used.

The powder 7 including indium is, for example, indium oxide, indium hydroxide, or the like processed or produced in a powder form. The powder 7 is partially dissolved in an alkaline aqueous solution; however, the powder 7 is not dissolved in the electrolyte 6 saturated with the indium component, but is dispersed or suspended. If convection or the like is generated in the electrolyte 6, the powder 7 becomes dispersed or suspended in the electrolyte 6. That is, the powder 7 is present in the electrolyte 6 in a mobile form. Here, "in a mobile form" does not mean that the powder 7 can move only in a localized space between other powders 7 present in the surrounding area, but instead, means that the powder 7 moves to another position in the electrolyte 6, and thereby the powder 7 is exposed to the electrolyte 6 at a position other than the initial position. Furthermore, the expression "in a mobile form" also means that the powder 7 can move to the vicinity of both the cathode 2 and the anodes 3, or that the powder 7 can move almost anywhere in the electrolyte 6 present in the casing 17. When [In(OH)₄]⁻ dissolved in the electrolyte 6 is consumed, the powder 7 mixed in the electrolyte 6 is dissolved so that the [In(OH)₄]⁻dissolved in the electrolyte 6 approaches saturated concentration and thus the powder 7 and the electrolyte 6 maintain equilibrium with each other.

The indium component in the electrolyte 6 is precipitated on the anodes 3a, 3b during charging, together with the zinc species. This indium component may be precipitated on the anodes 3a, 3b as a mixture or compound that is integral with zinc, or may be precipitated separately from zinc. The zinc species in the electrolyte 6 reduced due to charging is supplied from the powder 7 including zinc, and the indium component in the electrolyte 6 reduced due to charging is supplied from the powder 7 including indium, which makes it easy to maintain a state in which zinc is less likely to grow as dendrites.

The powder 7 including indium to be added may be, in a proportion of the indium element with respect to the amount of the electrolyte 6, 5 × 10⁻³ mol·dm⁻³ or more and 0.1 mol·dm⁻³ or less. The amount of indium is the amount added separately from the indium component added when making the electrolyte 6.

By setting the amount of the powder 7 including indium to be 1 × 10⁻³ mol·dm⁻³ or more, the growth of dendrites can be effectively reduced as described above. By setting the amount of the powder 7 including indium added first to be 1 × 10⁻² mol·dm⁻³ or more and furthermore 2.5 × 10⁻² mol·dm⁻³ or more, the growth of dendrites can be effectively reduced.

The powder 7 including indium relatively easily adheres to the anodes 3a, 3b and the like. This adhesion narrows the interval between the electrodes, thereby increasing the likelihood of a short circuit. By setting the amount of the powder 7 including indium to be 5 × 10⁻² mol dm⁻³ or less, the likelihood of a short circuit can be reduced.

The powder 7 including bismuth is, for example, bismuth oxide, bismuth hydroxide, or the like processed or produced in a powder form. The powder 7 is partially dissolved in an alkaline aqueous solution; however, the powder 7 is not dissolved in the electrolyte 6 saturated with the bismuth component, but is dispersed or suspended. If convection or the like is generated in the electrolyte 6, the powder 7 becomes dispersed or suspended in the electrolyte 6. That is, the powder 7 is present in the electrolyte 6 in a mobile form. Here, "in a mobile form" does not mean that the powder 7 can move only in a localized space between other powders 7 present in the surrounding area, but instead, means that the powder 7 moves to another position in the electrolyte 6, and thereby the powder 7 is exposed to the electrolyte 6 at a position other than the initial position. Furthermore, the expression "in a mobile form" also means that the powder 7 can move to the vicinity of both the cathode 2 and the anodes 3, or that the powder 7 can move almost anywhere in the electrolyte 6 present in the casing 17. When [Bi(OH)₄]⁻ dissolved in the electrolyte 6 is consumed, the powder 7 mixed in the electrolyte 6 is dissolved so that the [Bi(OH)₄]⁻dissolved in the electrolyte 6 approaches saturated concentration and thus the powder 7 and the electrolyte 6 maintain equilibrium with each other.

The bismuth component in the electrolyte 6 is precipitated on the anodes 3a, 3b during charging, together with the zinc species. This bismuth component may be precipitated on the anodes 3a, 3b as a mixture or compound that is integral with zinc, or may be precipitated separately from zinc. The zinc species in the electrolyte 6 reduced due to charging is supplied from the powder 7 including zinc, and the bismuth component in the electrolyte 6 reduced due to charging is supplied from the powder 7 including bismuth, which makes it easy to maintain a state in which zinc is less likely to grow as dendrites.

The powder 7 including bismuth to be added may be, in a proportion of the bismuth element with respect to the amount of the electrolyte 6, 1 × 10⁴ mol·dm⁻³ or more and 1 × 10³ mol·dm⁻³ or less. The amount of bismuth is the amount added separately from the bismuth component added when making the electrolyte 6.

By setting the amount of the powder 7 including bismuth to be 1 × 10⁻⁴ mol·dm⁻³ or more, dendrites can be made less likely to grow as described above.

The powder 7 including bismuth relatively easily adheres to the anodes 3a, 3b and the like. This adhesion narrows the interval between the electrodes, thereby increasing the likelihood of a short circuit. By setting the amount of the powder 7 including bismuth to be 1 × 10⁻³ mol·dm⁻³ or less, the likelihood of a short circuit can be reduced.

The gas bubbles 8 are constituted by, for example, a gas that is inert to the cathode 2, the anodes 3, and the electrolyte 6. Examples of such a gas include nitrogen gas, helium gas, neon gas, and argon gas. When the gas bubbles 8 of an inert gas are generated in the electrolyte 6, modification of the electrolyte 6 can be reduced. Furthermore, for example, deterioration of the electrolyte 6, which is an alkaline aqueous solution, containing the zinc species can be reduced, and the ionic conductivity of the electrolyte 6 can be maintained at a high value. Note that the gas may contain air.

The gas bubbles 8 formed from the gas supplied into the electrolyte 6 from the generation unit 9 float in the electrolyte 6 between both ends in the Y-axis direction, and more specifically, between the anode 3a and an inner wall 10a of the reaction unit 10 and between the anode 3b and an inner wall 10b of the reaction unit 10. The gas floating as the gas bubbles 8 in the electrolyte 6 disappears at a liquid surface 6a of the electrolyte 6, and forms a gas layer 13 between an upper plate 18 and the liquid surface 6a of the electrolyte 6.

Here, an electrode reaction in the secondary battery 1 will be described using, as an example, a nickel zinc battery in which nickel hydroxide is used as the cathode active material. The reaction formulas at the cathode 2 and the anodes 3 during charging are as follows.

Cathode:

   Ni(OH)₂ + OH⁻ → NiOOH + H₂O + e⁻
Anodes:

   [Zn(OH)₄]²⁻ + 2e⁻ → Zn + 4OH⁻

In general, there is a concern that, in association with these reactions, dendrites generated at the anodes 3 may grow toward the cathode 2 side, and conduction may occur between the cathode 2 and the anodes 3. As is clear from the reaction formulas, as zinc precipitates due to charging at the anodes 3, the concentration of [Zn(OH)₄]²⁻ in the vicinity of the anodes 3 decreases. Furthermore, the phenomenon of decrease in the concentration of [Zn(OH)₄]²⁻in the vicinity of the precipitated zinc is one of the causes of dendritic growth. In other words, the zinc species [Zn(OH)₄]²⁻ in the electrolyte 6 is maintained at a high concentration by replenishment of the [Zn(OH)₄]²⁻ in the electrolyte 6 consumed during charging. As a result, the growth of dendrites is reduced, and the likelihood of conduction between the cathode 2 and the anodes 3 is reduced.

In the secondary battery 1, the powder 7 including zinc is mixed in the electrolyte 6, and gas is supplied from discharge ports 9a of the generation unit 9 into the electrolyte 6 to generate the gas bubbles 8. The gas bubbles 8 float in the electrolyte 6 upward from below the reaction unit 10 between the anode 3a and the inner wall 10a and between the inner wall 10b and the anode 3b.

With the above-described floating of the gas bubbles 8 between the electrodes, a rising liquid flow is generated in the electrolyte 6, and the electrolyte 6 flows upward from an inner bottom 10e side of the reaction unit 10 between the anode 3a and the inner wall 10a and between the inner wall 10b and the anode 3b. Then, with the rising liquid flow of the electrolyte 6, a descending liquid flow is generated between the cathode 2 and the anode 3a and between the cathode 2 and the anode 3b, and the electrolyte 6 flows downward from above inside the reaction unit 10.

As a result, when the [Zn(OH)₄]²⁻ in the electrolyte 6 is consumed by charging, the zinc in the powder 7 dissolves so as to follow this consumption, and thereby the electrolyte 6 containing a high concentration of the [Zn(OH)₄]²⁻is replenished in the vicinity of the anodes 3. Therefore, the [Zn(OH)₄]²⁻ in the electrolyte 6 can be maintained at a high concentration, and the likelihood of conduction between the cathode 2 and the anodes 3 in association with the growth of dendrites can be reduced.

Furthermore, in the anodes 3, Zn is consumed by discharging, and [Zn(OH)₄]²⁻ is generated; however, because the electrolyte 6 is already in a saturated state, ZnO is precipitated from excess [Zn(OH)₄]²⁻ in the electrolyte 6. At this time, the zinc consumed at the anodes 3 is zinc that is deposited on the surfaces of the anodes 3 during charging. Therefore, unlike a case in which charging and discharging are repeated using an anode originally containing a zinc species, so-called shape changing in which the surface shape of the anodes 3 changes does not occur. As a result, with the secondary battery 1 according to the first embodiment, degradation over time of the anodes 3 can be reduced. Note that depending on the state of the electrolyte 6, the zinc species precipitated from the excess Zn(OH)₄]²⁻ is Zn(OH)₂ or a mixture of ZnO and Zn(OH)₂.

As described above, in the anodes 3, the growth of dendrites is reduced by maintaining the [Zn(OH)₄]²⁻ in the electrolyte 6 at a high concentration. However, when the electrolyte 6 containing a saturated state or a high concentration of [Zn(OH)₄]²⁻ is retained in the vicinity of the anodes 3 during charging, precipitated mossy zinc may adhere to the surfaces of the anodes 3. The precipitated mossy zinc is, for example, bulkier than zinc precipitated at normal times having a bulk density of about 4120 kg m⁻³, and therefore, the flow of the gas bubbles 8 and the electrolyte 6 is inhibited by a narrowed interval between the cathode 2 and the anodes 3, whereby the electrolyte 6 housed in the reaction unit 10 tends to be retained. Furthermore, when mossy zinc precipitated on the anodes 3 reaches the cathode 2, conduction between the anodes 3 and the cathode 2 occurs.

To address this, in the secondary battery system 100 according to the first embodiment, the electrolyte 6 containing the indium component, the bismuth component, and the halogen species is applied as described above, and the control device 40 is provided. The control device 40 has a controller 41 that controls the charging of the secondary battery 1 and a storage unit 42.

The controller 41 includes a computer or various circuits including, for example, a central processing unit (CPU), a read only memory (ROM), a random access memory (RAM), a hard disk drive (HDD), an input/output port, and the like. The CPU of such a computer functions as the controller 41 by, for example, reading and executing a program stored in the ROM.

The controller 41 may also be constituted by hardware such as an application specific integrated circuit (ASIC) or a field programmable gate array (FPGA).

The storage unit 42 corresponds to, for example, the ROM and the HDD. The ROM and the HDD can store various configuration information in the control device 40. Note that the controller 41 may also acquire various information via another computer or portable recording medium connected by a wired or wireless network.

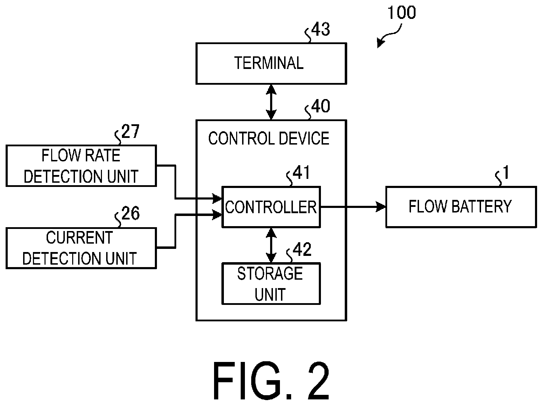

The control device 40 performs charging control on the secondary battery 1 in accordance with the composition of the electrolyte 6, thereby further reducing conduction between the anode and the cathode. This point will be further described with reference to FIG. 2.

FIG. 2 is a block diagram illustrating a functional configuration of a secondary battery system according to the first embodiment. As illustrated in FIG. 2, the secondary battery system 100 includes a current detection unit 26 and a flow rate detection unit 27 in addition to the secondary battery 1 and the control device 40 described above.

The current detection unit 26 detects a charge current measured during charging of the secondary battery 1, and transmits information on the charge current to the controller 41. The flow rate detection unit 27 detects the flow rate of the electrolyte 6 flowing between the cathode 2 and the anodes 3 during charging, and transmits to the controller 41 information on the flow rate. The flow rate detection unit 27 is a flow rate meter that detects the flow rate of the electrolyte 6 flowing between the anode 3a and the diaphragm 4 and between the diaphragm 5 and the anode 3b, for example. As the flow rate meter, for example, a mechanical, sonic, electromagnetic, optical flow rate meter, or the like can be used. Furthermore, particle image velocimetry (PIV) may be applied as the current detection unit 26. The PIV performs imaging by mixing marker particles moving at the same speed as the electrolyte 6 in the electrolyte 6 in advance.

The controller 41 controls the charging of the secondary battery 1 on the basis of the information sent from the current detection unit 26 and the flow rate detection unit 27 and the configuration information stored in the storage unit 42. Specifically, the controller 41 controls the charging of the secondary battery 1 so that a current density I (unit: [mA·cm⁻²]) of the anodes 3 calculated on the basis of the information acquired from the current detection unit 26 and a flow rate R (unit: [cm·sec⁻¹]) of the electrolyte 6 acquired from the flow rate detection unit 27 satisfy a relationship 0.01 ≤ C_{Zn} × R^{1/3} × C_{In}⁻¹ × I⁻¹ ≤ 300, in particular, 0.6 ≤ Czn × R^{1/3} × C_{In}⁻¹ × I⁻¹ ≤ 70.2. Here, Czn and C_{In} are the molar concentrations (unit: [mol·dm⁻³]) of the zinc component and the indium component included in the electrolyte 6 before being used or after the end of discharging. In the example illustrated in FIG. 1, the current density I is the average value of the current densities calculated for the respective anodes 3a, 3b. Similarly, the flow rate R is the average value of the flow rates of the electrolyte 6 flowing between the anode 3a and the diaphragm 4 and between the diaphragm 5 and the anode 3b.

The above relational expression (C_{Zn} × R^{1/3} × C_{In}⁻¹ × I⁻¹) is a factor that serves as an indicator for replenishing the [Zn(OH)₄]²⁻ consumed during charging of the secondary battery 1, and is hereinafter referred to as a zinc supply factor (F_{Zn}). For example, as the flow rate R increases, F_{Zn} increases. In addition, as the current density I increases, F_{Zn} decreases. The F_{Zn} having such a relationship accurately expresses the balance between consumption and replenishment of [Zn(OH)₄]²⁻ at and in the vicinity of the anodes 3 during charging of the secondary battery 1, using the flow rate R and the current density I.

By setting F_{Zn} to be 0.01 or more and 300 or less, in particular 0.6 or more and 70.2 or less, and, furthermore, 1 or more and 30.2 or less, the balance between consumption and replenishment of [Zn(OH)₄]²⁻ during charging is appropriately maintained, and the precipitation of dendritic or mossy zinc on the surfaces of the anodes 3 is reduced. As a result, the problem of conduction between the anodes 3 and the cathode 2 is reduced. In contrast, if F_{Zn} is less than 0.01, replenishment of [Zn(OH)₄]²⁻ is insufficient in the vicinity of the anodes 3, and the generation of dendrites is likely to cause conduction between the anodes 3 and the cathode 2. In addition, if F_{Zn} exceeds 300, [Zn(OH)₄]²⁻ is excessively replenished in the vicinity of the anodes 3, and the deposition of mossy zinc on the surfaces of the anodes 3 is likely to cause conduction between the anodes 3 and the cathode 2. Note that the flow rate R of the electrolyte 6 can be controlled by adjusting the discharge amount of gas supplied from the discharge ports 9a of the generation unit 9 into the electrolyte 6 per unit time.

The secondary battery 1 included in the secondary battery system 100 according to the first embodiment will be further described. The generation unit 9 is disposed below the reaction unit 10. The generation unit 9 is internally hollow so as to temporarily store a gas supplied from the supply unit 14 described below. Furthermore, an inner bottom 10e of the reaction unit 10 is disposed so as to cover the hollow portion of the generation unit 9, and serves as a top plate of the generation unit 9.

Furthermore, the inner bottom 10e includes a plurality of discharge ports 9a arranged along the X-axis direction and the Y-axis direction. The generation unit 9 generates the gas bubbles 8 in the electrolyte 6 by discharging, from the discharge ports 9a, the gas supplied from the supply unit 14. The discharge ports 9a have a diameter of, for example, from 0.05 mm or more and 0.5 mm or less. The diameter of the discharge ports 9a may be regulated in this manner, and thus the problem of the electrolyte 6 and the powder 7 entering the hollow portion of the interior of the generation unit 9 from the discharge ports 9a can be reduced. In addition, when the diameter is defined in this manner, a pressure loss suitable for formation of the gas bubbles 8 is suitably imparted to the gas discharged from the discharge ports 9a.

In addition, the interval (pitch) along the X-axis direction of the discharge ports 9a may be, for example, 2.5 mm or more and 50 mm or less, and further 10 mm or less. However, the discharge ports 9a are not limited in terms of size or interval as long as the discharge ports 9a are disposed such that the formed gas bubbles 8 can appropriately flow between mutually facing cathode 2 and anodes 3, respectively.

The casing 17 and the upper plate 18 are formed of a resin material having alkaline resistance and an insulating property, such as polystyrene, polypropylene, polyethylene terephthalate, polytetrafluoroethylene, or polyvinyl chloride, for example. The casing 17 and the upper plate 18 are preferably formed of the same material as each other, but may be formed of different materials. Alternatively, the generation unit 9 may be disposed inside the reaction unit 10.

The supply unit 14 supplies a gas collected from the interior of the casing 17 via piping 16 to the generation unit 9 via piping 15. The supply unit 14 is, for example, a pump (gas pump), a compressor, or a blower, capable of transferring a gas. When the supply unit 14 has high air-tightness, the secondary battery 1 is resistant to reduction in power generation performance, which may be caused by leakage of water vapor derived from the gas or the electrolyte 6 to the outside. Furthermore, an adjustment valve (not illustrated) for adjusting the amount of gas discharged per unit time from the discharge ports 9a may be provided between the supply unit 14 and the generation unit 9. Such an adjustment valve can be configured to be driven, for example, on the basis of a control signal from the controller 41.

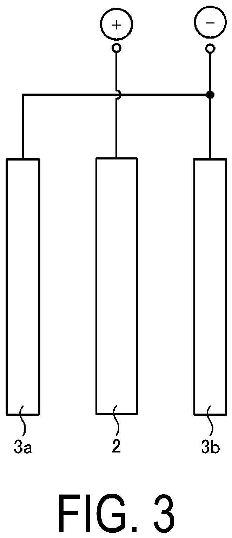

Next, the connection between the electrodes in the secondary battery 1 will be described. FIG. 3 is a diagram illustrating an example of a connection between the electrodes of the secondary battery included in the secondary battery system according to the first embodiment.

As illustrated in FIG. 3, the anode 3a and the anode 3b are connected in parallel. By connecting the anodes 3 in parallel in this manner, each of the electrodes of the secondary battery 1 can be appropriately connected and used even when the total number of cathodes 2 differs from the total number of anodes 3.

As described above, the secondary battery 1 includes the anodes 3a, 3b disposed so as to face each other with the cathode 2 interposed therebetween. In the secondary battery 1 in which the two anodes 3a, 3b correspond to one cathode 2 in this manner, the current density per anode is reduced compared with a secondary battery in which the cathode 2 and the anode 3 correspond to each other in a 1:1 relationship. Thus, with the secondary battery 1 according to the first embodiment, the generation of dendrites at the anodes 3a, 3b is further reduced, whereby the conduction between the anodes 3a, 3b and the cathode 2 can be further reduced.

Note that in the secondary battery 1 illustrated in FIG. 1, a total of three electrodes are configured so that the anodes 3 and the cathode 2 are alternately disposed, but the configuration is not limited to this. Five or more electrodes may be alternately disposed, or one cathode 2 and one anode 3 may be disposed. Furthermore, in the secondary battery 1 illustrated in FIG. 1, the electrodes are configured such that the anodes 3 are present at both ends, but the configuration is not limited to this. The electrodes may be configured such that cathodes 2 are present at both ends. Furthermore, the same number of anodes 3 and cathodes 2 may be alternately disposed so that one end is the cathode 2 and the other end is the anode 3.

### Second Embodiment

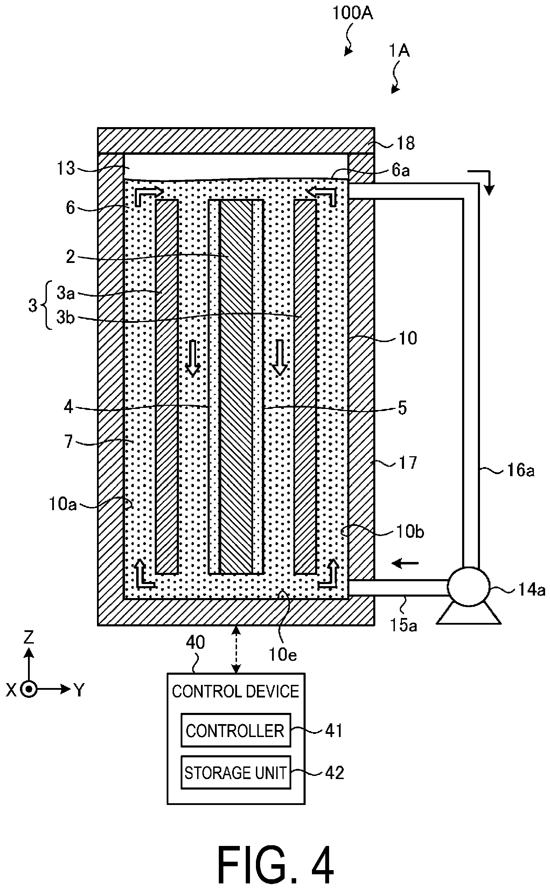

FIG. 4 is a diagram illustrating an overview of a secondary battery system according to a second embodiment. A secondary battery 1A included in a secondary battery system 100A illustrated in FIG. 4 has the same configuration as that of the secondary battery 1 included in the secondary battery system 100 according to the first embodiment with the exception that a supply unit 14a, piping 15a, and piping 16a are provided instead of the generation unit 9, the supply unit 14, the piping 15, and the piping 16 illustrated in FIG. 1.

The supply unit 14a supplies the electrolyte 6, in which the powder 7 is mixed, to a lower portion of the casing 17 through the piping 15a, the electrolyte 6 being collected from the interior of the casing 17 through the piping 16a. The supply unit 14a is an example of a flow device.

The supply unit 14a is, for example, a pump capable of transferring the electrolyte 6. When the supply unit 14a has high air-tightness, the secondary battery 1A is resistant to a reduction in the power generation performance, which may be caused by leakage of the powder 7 and the electrolyte 6 to the outside. Furthermore, similar to the secondary battery 1 according to the first embodiment, the electrolyte 6 sent to the inside of the casing 17 is subjected to a charging/discharging reaction while flowing upward between the electrodes.

Even in the secondary battery system 100A including the secondary battery 1A not having the generation unit 9, the controller 41 controls the charging of the secondary battery 1A on the basis of the amounts of the indium component and the zinc component contained in the electrolyte 6, consequently, the balance between consumption and replenishment of [Zn(OH)₄]²⁻ during charging is appropriately maintained and the precipitation of dendritic or mossy zinc on the surfaces of the anodes 3 is reduced. As a result, with the secondary battery 1A according to the second embodiment, for example, the problem of conduction between the anodes 3 and the cathode 2 is reduced.

Note that with the secondary battery 1A illustrated in FIG. 4, an opening connected to the piping 16a is provided at the inner wall 10b facing the main surface of each electrode, that is, an opening is provided at an end portion of the reaction unit 10 in the Y-axis direction, but this is not limiting, and the opening may be provided at an end portion of the reaction unit 10 in the X-axis direction.

With the secondary battery 1A illustrated in FIG. 4, the supply unit 14a supplies the electrolyte 6 in which the powder 7 is mixed, but this is not limiting, and the supply unit 14a may supply the electrolyte 6 alone. In such a case, a tank for temporarily storing the electrolyte 6 in which the powder 7 is mixed may be provided midway along the piping 16a, for example, and the concentration of [Zn(OH)₄]²⁻ dissolved in the electrolyte 6 may be adjusted inside the tank.

Embodiments according to the present invention were described above. However, the present invention is not limited to the embodiments described above, and various modifications can be made without departing from the essential spirit of the present invention. For example, in each of the embodiments described above, the powder 7 is mixed in the electrolyte 6, but this is not limiting, and the powder 7 need not be included. In this case, the zinc component dissolved in the electrolyte 6 may be in a saturated state or may have a lower concentration than that in the saturated state. Furthermore, the electrolyte 6 may be a solution in which the zinc component is dissolved in a supersaturated state. Furthermore, from the perspective of rapidly supplying the electrolyte 6 containing a high concentration of [Zn(OH)₄]²⁻ between the cathode 2 and the anodes 3, the amount of the electrolyte 6 may be adjusted so that the upper ends of the cathode 2 and the anodes 3 are disposed below the liquid surface 6a of the electrolyte 6.

Moreover, in the embodiments described above, the diaphragms 4, 5 are disposed so as to sandwich the cathode 2 from both sides in the thickness direction, but this is not limiting. It suffices that the diaphragms 4, 5 be disposed between the cathode 2 and the anodes 3, and may cover the cathode 2. Also, the diaphragms 4, 5 do not necessarily have to be arranged therein.

In each of the embodiments described above, the electrolyte 6 rises between the anode 3a and the inner wall 10a and between the inner wall 10b and the anode 3b, and descends between the cathode 2 and the anode 3a and between the cathode 2 and the anode 3b, but this is not limiting. The electrolyte 6 may rise between the cathode 2 and the anode 3a and between the cathode 2 and the anode 3b, and may descend between the anode 3a and the inner wall 10a and between the inner wall 10b and the anode 3b. In such a case, in the secondary battery 1 according to the first embodiment, the discharge ports 9a are disposed so that the gas bubbles 8 float between the cathode 2 and the anode 3a and between the cathode 2 and the anode 3b.

Note that the supply units 14, 14a may be constantly operated, but from the perspective of reducing power consumption, the supply rate of the gas or the electrolyte 6 may be reduced during discharging to be lower than that during charging.

In the embodiments described above, the controller 41 controls the charging of the secondary batteries 1, 1A on the basis of the information sent from the current detection unit 26 and the flow rate detection unit 27 and the configuration information stored in the storage unit 42, but this is not limiting. The controller 41 may control the charging and discharging of the secondary batteries 1, 1A in a similar manner.

### Examples

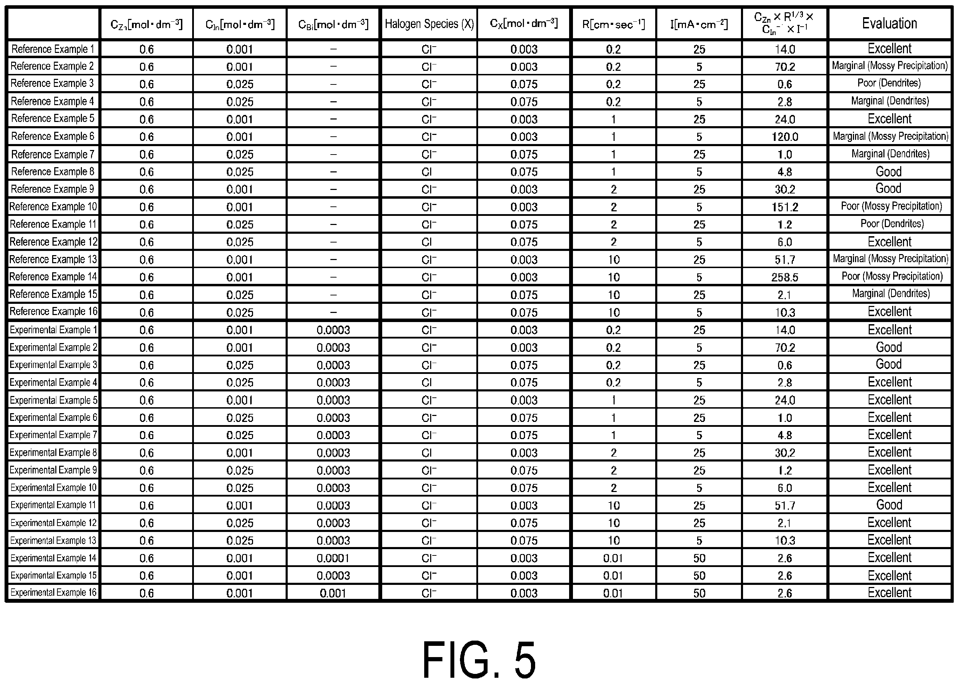

The secondary battery systems 100, 100A according to each of the embodiments described above were produced and states of deposition of zinc adhering to the surfaces of the anodes 3 due to charging were evaluated. The results are shown in FIG. 5.

FIG. 5 is a table showing evaluation results of states of deposition of zinc adhering to the surface of an anode due to charging. Note that in Reference Examples 1 to 16 and Experimental Examples 1 to 16 shown in FIG. 5, the electrolyte 6 to be used was prepared to contain, with respect to 1 dm³ of deionized water, 6.5 mol of KOH, 0.6 mol of ZnO, 0.001 mol or 0.025 mol of InCl₃, and if necessary, KCl₃ was further added and dissolved. Furthermore, in Experimental Examples 1 to 16, with respect to 1 dm³ of deionized water, from 0.1 mmol (0.0001 mol) to 1 mmol (0.001 mol) of In₂O₃ was further included as a bismuth component.

In FIG. 5, Czn, C_{In}, C_{Bi}, and Cx are the molar concentrations of the zinc component, the indium component, the bismuth component, and the halogen species included in the electrolyte 6 under preparation, that is, before being used. FIG. 5 also shows the type of the halogen species X (Cl⁻).

In Reference Examples 1 to 16 and Experimental Examples 1 to 16, the secondary battery system 100 using the secondary battery 1 was charged to reach 100% battery capacity under constant rate and constant current conditions, that is, the flow rate R of the electrolyte 6 was set to be from 0.2 to 10 cm·sec⁻¹ and the current density I was set to be from 5 to 50 mA·m⁻². The results from the relational expression (C_{Zn} × R^{1/3} × C_{In}⁻¹ × I⁻¹) and evaluation after the completion of charging are shown in FIG. 5, together with the flow rate R and the current density I.

FIG. 5 also shows a four-grade evaluation: "Excellent" indicates a particularly good result with no dendritic or mossy zinc precipitation on the surfaces of the anodes 3; "Good" indicates a small amount of dendritic or mossy zinc precipitation observed; "Marginal" indicates dendritic or mossy zinc precipitation observed to an extent not problematic for practical use; and "Poor" indicates a large amount of dendritic or mossy zinc precipitation observed that could cause problems in practical use. In the present examples, "Excellent" indicates the maximum height of the zinc deposited on the anode 3 with respect to the surfaces of the anodes 3 was less than 1 µm, "Good" indicates the maximum height was 1 µm or more and less than 10 µm, "Marginal" indicates the maximum height was 10 µm or more and less than 100 µm, and "Poor" indicates the maximum height was 100 µm or more. In the four-grade evaluation described above, "Excellent", "Good", and "Marginal" are considered to satisfy the criteria for the secondary battery systems 100, 100A. Note that the interval between the cathode 2 and the anodes 3 in the present examples, and more specifically, the intervals between the anode 3a and the diaphragm 4 and between the diaphragm 5 and the anode 3b are both 500 µm.

In addition, the "Evaluation" column in FIG. 5 indicates the specific form of precipitation such as "dendrites" or "mossy precipitation" along with the four-grade evaluation for the cases with dendritic or mossy zinc precipitation observed.

As can be seen from FIG. 5, with the secondary battery 1 according to the embodiment, by using the electrolyte 6 further including the bismuth component in addition to the indium component and the halogen species, as described above, the likelihood of conduction between the cathode and the anode can be reduced compared with using the electrolyte 6 including no bismuth component. In particular, with the secondary battery system 100 according to the embodiment, by controlling the flow rate R and the current density I during charging so that the relational expression (C_{Zn} × R^{1/3} × C_{In}⁻¹ × I⁻¹) falls within a predetermined range, the conduction between the anode and cathode can be further reduced.

Note that although a description of specific results is omitted, similar results to those in FIG. 5 were obtained with the secondary battery system 100A using the secondary battery 1A.

Additional effects and variations can be easily derived by a person skilled in the art. Thus, a wide variety of aspects of the present invention are not limited to the specific details and representative embodiments represented and described above. Accordingly, various changes are possible without departing from the spirit or scope of the general inventive concepts defined by the appended claims and their equivalents.

### Reference Signs List

1, 1A: Secondary battery
2: Cathode
3, 3a, 3b: Anode
4, 5: Diaphragm
6: Electrolyte
7: Powder
8: Gas bubble
9: Generation unit
9a: Discharge port
10: Reaction unit
14, 14a: Supply unit
17: Casing
18: Upper plate
40: Control device
41: Controller
100, 100A: Secondary battery system

## Claims

1. A secondary battery comprising:
an electrolyte comprising zinc, indium, bismuth, and a halogen species; and
a cathode and an anode disposed in the electrolyte.

2. The secondary battery according to claim 1, wherein
the halogen species comprises a chlorine ion.

3. The secondary battery according to claim 1 or 2, wherein
the halogen species comprises a bromine ion.

4. The secondary battery according to any one of claims 1 to 3, wherein
a molar concentration of the bismuth is smaller than a molar concentration of the indium.

5. The secondary battery according to any one of claims 1 to 4, further comprising:
a flow device configured to cause the electrolyte to flow.

6. A secondary battery system comprising:
the secondary battery described in any one of claims 1 to 5; and
a controller configured to control the secondary battery; wherein
the controller is configured to control charging of the secondary battery based on amounts of the indium, the bismuth, and the zinc in the electrolyte.

7. The secondary battery system according to claim 6, wherein
the controller controls the charging of the secondary battery to ensure a current density I [mA·cm⁻²] of the anode and a flow rate R [cm·sec⁻¹] of the electrolyte flowing between the cathode and the anode satisfy a relationship 0.01 ≤ C_{Zn} × R^{1/3} × C_{In}⁻¹ × I⁻¹ ≤ 300 where a molar concentration of the indium in the electrolyte is C_{In} [mol·dm⁻³] and a molar concentration of the zinc is C_{Zn} [mol·dm⁻³].

8. The secondary battery system according to claim 7, wherein
the controller controls the charging of the secondary battery to ensure a relationship Czn × R^{1/3} × C_{In}⁻¹ × I⁻¹ ≥ 0.6 is satisfied.

9. The secondary battery system according to claim 7 or 8, wherein
the controller controls the charging of the secondary battery to ensure a relationship Czn × R^{1/3} × C_{In}⁻¹ × I⁻¹ ≤ 70.2 is satisfied.

10. A control method executed by a secondary battery that comprises:
a cathode and an anode;
an electrolyte comprising zinc, indium, bismuth, and a halogen species, the electrolyte contacting the cathode and the anode; and
a flow device configured to cause the electrolyte to flow,
the control method comprising:
controlling a current density of the anode during charging and a flow rate of the electrolyte flowing between the cathode and the anode based on amounts of the indium and the zinc in the electrolyte.
